# EUROPEAN PATENT APPLICATION

(11) **EP 2 738 438 A1**
(43) Date of publication of application: **04.06.2014**
(21) Application number: 12194667.7
(22) Date of filing: 28.11.2012
(51) Int. Cl.: F16L 41/08, F16L 55/179

(54) **Method and apparatus to seal a junction between a lined main pipe and a lateral pipe connected thereto**

(71) Applicant: Sekisui Norditube Technologies SE, 32816 Schieder-Schwalenberg (DE)
(72) Inventor: Heuser, Mirko, 76761 Rülzheim (DE)
(74) Representative: Office Freylinger

(57) **Abstract**

The invention relates to a method for creating a junction between a main pipe having a cured rehabilitation liner and a lateral pipe, wherein said main pipe has a lateral pipe opening in fluid communication with said lateral pipe. The method is being used in conjunction with an installation of said liner on an inner surface of said main pipe, wherein the following steps are performed:
- inserting a first sealing device into said lateral pipe opening, said first sealing device blocking said lateral pipe opening and protruding with one end into said main pipe,
- installing and curing said liner on said inner surface of said main pipe covering said lateral pipe opening, thereby creating a bump between said liner and said main pipe at said lateral pipe opening, said bump defining a cavity between the liner and the inner surface of the main pipe
- making a hole in said liner at said lateral pipe opening,
- injecting a substance into said cavity to substantially fill said cavity;
- curing said substance;
- removing said sealing device from said lateral pipe opening after said substance has cured.

## Description

### Technical field

The present invention generally relates to a method and apparatus for sealing a junction between a lined main pipe and a lateral pipe connected thereto.

### Background Art

It is well known within the art, that the repairing of a pipe, such as a sewer pipe or a pressure pipe (e.g. drinking water pipe, gas pipe etc.) is extremely costly if the pipe has to be removed. An alternative to restore or/and repair the structural integrity for the intended purpose is to apply a rehabilitation liner to the inner surface thereof. A great variety of different liners and methods for applying a liner to a pipe are already available on the market. Often, such a rehabilitation liner is made out of flexible, resin impregnated material that is fed into the pipe. Thereafter, the material is pressed onto the inner surface of the pipe by applying an internal pressure to the liner. The resin is then cured and after a period of time the liner rigidifies and the internal curing pressure is no longer needed. Thus the cured rehabilitation liner acts as a new pipe within the old pipe. Depending on the materials used the new pipe is being capable to withstand external and internal loads.

However, the complexity of repairing a pipe with a liner increases when a pipe which has a junction has to be lined. A first problem is to line the pipe without obstructing the opening to the lateral pipe at the junction when applying the liner. This problem has been solved by the invention as disclosed in US 5 333 649. In US 5 333 649, a cap or plug is fitted into the branched pipe opening at the junction to block the entrance of the branched pipe while the liner is fitted to the main pipe. As a result there is no possibility of formation of a thick solidified adhesive layer in the branched pipe, which would demand, when solidified, additional effort to the subsequent boring operation. The plug comprises a convex portion orientated to the inside of the main pipe, thereby reducing the effort to spot the entrance to the branched pipe after the liner has cured. After the liner has rigidified, the portion of the cured liner covering the opening to the branched pipe is removed. Although the liner is pressed onto the inside of the pipe, the fluid circulating through the pipe can gradually loosen the liner from the inner surface by infiltrating the area between the liner and the inner surface of the pipe at the junction.

A solution to provide an additional support to the liner at the area of the opening at a pipe junction is disclosed in WO 2010 115 290. In WO 2010 115 290 an additional reinforcing device is fitted through the lateral pipe opening enabling to attach an additional layer of liner at the region of the pipe opening before the liner is fitted to the pipe. In the most common cases, a felt is used to reinforce the liner in the susceptible region around the opening at a pipe junction. However, to pierce through the liner at the pipe junction without damaging the reinforcing device, the boring has to be very precise. This is a complicated and demanding undertaking, since the liner is pierced trough from the inside of the tube.

Hence, a method that is easier to handle with a reduced amount of precision is desirable.

### Technical problem

It is an object of the present invention to provide a less demanding method to seal a junction between a main pipe and a lateral pipe connected hereto. This object is achieved by an invention as claimed in claim 1.

### General Description of the Invention

The invention relates to a method for creating a junction between a main pipe having a cured rehabilitation liner and a lateral pipe, wherein said main pipe has a lateral pipe opening in fluid communication with said lateral pipe. The method is being used in conjunction with an installation of said liner on an inner surface of said main pipe, wherein the following steps are performed:
- inserting a first sealing device into said lateral pipe opening, said first sealing device blocking said lateral pipe opening and protruding with one end into said main pipe,
- installing and curing said liner on said inner surface of said main pipe covering said lateral pipe opening, thereby creating a bump between said liner and said main pipe at said lateral pipe opening, said bump defining a cavity between the liner and the inner surface of the main pipe
- making a hole in said liner at said lateral pipe opening,
- injecting a substance into said cavity to substantially fill said cavity;
- curing said substance;
- removing said sealing device from said lateral pipe opening after said substance has cured.

The method thus allows to create a fluid communication between a main pipe equipped with a cured rehabilitation liner and a lateral pipe.

The proposed method is used in conjunction with the installation of a resin impregnated rehabilitation liner on an inner surface of the main pipe in a well-known way such as e.g. in EP 0 701 086 or DE 97 09 350. A first sealing device is inserted into the lateral pipe opening by e.g. an operating machine, such as a robot located inside the main pipe, to block the lateral pipe opening in such a way that the first sealing device protrudes with one end into the main pipe, the other end being stuck in the lateral pipe. Thereafter the liner is installed, in a well-known way, against the inner surface of the main pipe. As the first sealing device protrudes with one end into the main pipe, the liner covers the protruding end of the first sealing device thus forms a bump, a bulge, an irregular prominence on the inner surface of the liner and a cavity, a hollow space is created between the liner and the main pipe at the lateral pipe opening.

Advantageously, a robot equipped with a camera, moving in the main pipe can easily detect this bump from inside the main pipe, since it is clearly distinguishable from the cylindrically smooth, regular surface of the liner. Thus the lateral passage can be detected and located with ease and subsequently pierced. Due to the bump, there is a cavity between the liner and the main pipe at the junction of the lateral pipe. The risk of damaging the inner surface of the main pipe and/or the lateral opening, during the piercing of the liner, is thus reduced. Furthermore, the hole made in the liner does not necessarily have to be fully aligned with the lateral pipe opening.

The first sealing device is preferably held in position by a frictional bond. The frictional bond can for example result from a difference in diameter between the maximum diameter of the first sealing device and the diameter of the lateral pipe opening. In one embodiment of the invention, the maximum diameter of the inserted plug results from the presence of flexible protrusions like ribs or the like holding the inserted plug in position by applying a pressure onto the interior surface of the pipe opening, by a frictional force.

In another embodiment of the invention the first sealing device is mounted into the lateral pipe opening by material bond, in that case a substance, such as e.g. a glue, has been applied between the inner surface of the lateral pipe opening and the outer surface of the first sealing device.

Advantageously, the first sealing device has an abutment flange, abutting against the inner surface of the main pipe when fully engaged into the lateral pipe opening. The length of the first sealing device protruding into the main pipe can thus be limited.

In one embodiment of the invention, the liner can be pierced at the lateral pipe opening by an operating machine, such as e.g. a robot, operating inside the main pipe. In further embodiments of the invention, the piece of the liner substantially covering the lateral pipe opening can be removed with a drill, a mill, a heating iron, a cutter or a striker.

The cavity is substantially filled with a substance, preferably a curable resin and more preferably the same resin that has been used in the liner. The resin is injected into the cavity by any known method.

An operating machine, such as e.g. a robot injects a substance through the pierced liner to substantially fill the cavity. After the substance has cured, the sealing device is removed from the lateral pipe opening.

The injecting device preferably comprises a flap that is pressed against the liner and covers the hole in the liner to seal off the cavity with regard to the main pipe. The substance can thus be injected and fill the cavity without leaking into the main pipe. The flap may comprise f.ex. a rubber disk or an inflatable ball that is pressed against the liner. Should any substance leak into the main pipe, this substance can be easily be removed after curing by milling or scraping.

After the resin has cured, an operating machine, such as e.g. a robot, removes the sealing device by pulling or/and turning it from the lateral pipe opening. The surface characteristics of the lateral pipe opening are substantially the same as the surface characteristics of the cylindrical element.

Alternatively, the sealing device can be removed by boring or milling.

In an other embodiment, two sealing devices are used, a first sealing device is used to create the bump in the liner and the cavity between the liner and the inner surface of the main pipe and a second sealing device is used during the filling of the cavity with a substance. In such a case, the first sealing device is removed from the lateral pipe after the liner has been pierced at the lateral pipe opening.

Preferably the first and/or second sealing device has a clamping element or a hook oriented towards the main pipe opening, which can be engaged by an operating machine, such as e.g. a robot, from inside the main pipe. The sealing device is thus easily removed from the lateral pipe opening by pulling or/and rotating the sealing device by the clamping device.

In said embodiment, a second sealing device is inserted into the lateral pipe opening. This second sealing device comprises an inner fixing element, an outer fixing element and a cylindrical mid-section situated between the two fixing elements. The inner fixing element is positioned so that it protrudes into the main pipe, all the way through the cavity and the liner whereas the outer fixing element being positioned inside the lateral pipe.

The second sealing device is preferably inserted into the lateral pipe opening from inside of the main pipe by an operating machine, such as e.g. a robot.

Once the second sealing device is inserted into the lateral pipe, the outer fixing element that has been fed in the lateral pipe opening and into the lateral pipe is positioned to assure a good sealing with the corresponding surface of the lateral pipe.

The sealing may be achieved i.e. by inflating an inflatable tip on the outer fixing element or by one or more protruding ribs and the like on the outer fixing element. The friction between the inflatable tip or the ribs against the lateral pipe effectively seals the sealing device against the lateral pipe. Prior to fitting the second sealing device to the main pipe the outer fixing element is deflated. After the second sealing device is inserted, the outer fixing element is inflated. By inflating the outer fixing element the second sealing device seals off the cavity delimited by the inner fixing element, the outer fixing element, the liner and the main pipe.

In one embodiment of the invention, the outer fixing element has a diameter similar to the mid section of the second sealing device, when being inserted into the lateral pipe opening.

According to an embodiment of the invention the outer fixing element comprises one or more protrusions or ribs.

Preferably the second sealing device is inserted in the lateral pipe such, that the inner fixing element is mounted, by abutting the inner fixing element against the liner. Thereby a seal between the inner fixing element and the liner is made.

After the second sealing device has been inserted, the cavity is substantially filled with a substance, preferably a curable resin and more preferably the same resin that has been used in the liner. The resin is injected trough the second sealing device into the sealed off cavity. In a preferred embodiment of the invention, the second sealing device comprises a passage that connects the cavity and the adjoining sealed off area with the interior of the main pipe. An operating machine, such as e.g. a robot, is connected to the passage of the second sealing device and injects a substance through the second sealing device to substantially fill the cavity. After the substance has cured, the second sealing device is removed from the lateral pipe opening.

After the resin has cured, an operating machine, such as e.g. a robot, removes the second sealing device by pulling or/and turning it from the lateral pipe opening. The surface characteristics of the lateral pipe opening are substantially the same as the surface characteristics of the cylindrical element.

One advantage of the present method is that the precision required to pierce the liner can be reduced. Indeed the hole pierced in the liner can be larger than the pipe opening and must not necessarily be aligned very precisely, as the cavity will be filled later on with a resin. The geometry of the connection is created by the second sealing device.

In one embodiment, the second sealing device is dimensioned such that there is substantially no play between its cylindrical element and the diameter of the lateral pipe opening. In this case the second sealing device fits perfectly into the lateral pipe opening. Thus, no other space than the cavity is being filled or covered with the substance.

According to another embodiment of the invention, the second sealing device is dimensioned such that there is play between its cylindrical element and the diameter of the lateral pipe. There are multiple possibilities such a play can be achieved. There can be different combinations of play, such as play between the hole pierced through the liner and the cylindrical element as well as play between the diameter of the lateral pipe opening and the diameter of the cylindrical element. The resulting play extends the adjoining cavity, which are then substantially filled with a resin. The cavity and the adjoining surface of the liner oriented towards the lateral pipe opening as well as the adjoining surface of the main pipe oriented towards the lateral pipe opening are covered with that same substance, to result in a substantially smooth, seamless surface.

The surface of the cylindrical element is - in a preferred embodiment - substantially smooth to facilitate the removal of the second sealing device from the lateral pipe opening and to create a smooth surface on the junction between the main pipe and the lateral pipe. The drag of the fluid flowing through said pipes is thus reduced. Since the diameter of the lateral pipe opening is smaller than the diameter of the lateral pipe and the main pipe, the flow rate is substantially limited by the diameter of the lateral pipe opening. Depending on the dynamic viscosity of the fluid and the speed of the fluid passing the lateral pipe opening, turbulent flow will occur first at the lateral pipe opening. Since turbulent flow is not only characterized by the Reynolds number, but also by the characteristics of the surface in contact with the fluid, the transverse momentum exchange in the boundary layer and thereby the transition from laminar flow to turbulent flow can by postponed by a smooth surface. Preferably, this can be done by applying a drag reducing design to the exterior surface of the cylindrical element, such as e.g. riblets.

Preferably, the second sealing device has at least one passage with two ends, one end is arranged on the inner fixing element oriented towards the inside of the main pipe and another end arranged on the cylindrical element oriented towards the inside of the cavity. Thereby the interior of the main pipe is being coupled in fluid communication with the cavity.

Advantageously, the second sealing device has multiple passages with one common end arranged on the inner fixing element and multiple ends circumferentially oriented towards the inside of the cavity and arranged on the cylindrical element. Thus the resin can be filled into the cavity more easily.

The invention further relates to a second sealing device comprising an inner fixing element connected to an outer fixing element by a cylindrical element, wherein the cylindrical element is of reduced diameter compared to the inner fixing element and the outer fixing element. The second sealing device is being used in conjunction with the installation of a liner at a pipe junction between a main pipe and a lateral pipe. Furthermore the second sealing device is mounted into the lateral pipe opening so that a cavity arranged between the liner and the main pipe can be sealed by a substance injected through the second sealing device. To seal off the cavity the second sealing device is mounted in such a way, that a seal between the inner fixing element and the liner is made and a seal between the outer fixing element and the main pipe or/and the lateral pipe is made.

Preferably, the surface of the cylindrical element is substantially smooth.

In one embodiment of the invention the inner fixing element or/and the outer fixing element is substantially spherically shaped.

The inner fixing element or/ the outer fixing element preferably comprises an elastic material.

In a preferred embodiment, the inner fixing element or/and the outer fixing element or/and cylindrical element is inflatable.

The second sealing device may further comprise a passage with two ends, one end arranged on the inner fixing element and one end arranged on the cylindrical element.

Preferably, the end of the passage comprises multiple passages with one common end arranged on the inner fixing element and with multiple ends circumferentially arranged on the cylindrical element.

### Brief Description of the Drawings

Preferred embodiments of the invention will now be described, by way of example, with reference to the accompanying drawings in which:

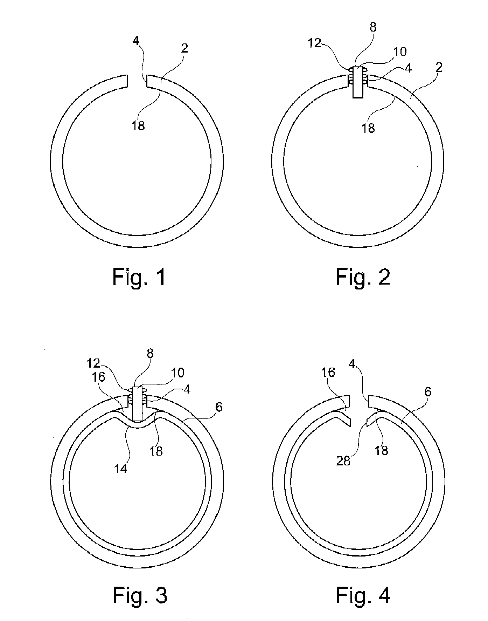

Fig. 1: is a cross section view of a pipe with a lateral pipe opening;
Fig. 2: is a cross section view of a pipe with a plug inserted into the lateral pipe opening.
Fig. 3: is a cross section view of a lined pipe with a plug inserted into the lateral pipe opening.
Fig.°4: is a cross section view of a lined pipe with a pierced liner at the lateral pipe opening.
Fig.°5: is a cross section view of a lined pipe with a second sealing device inserted through the lateral pipe opening to seal off the cavity and the adjoining plays.
Fig.°6: is a cross section view of a lined pipe with a second sealing device inserted through the lateral pipe opening after the cavity and the adjoining plays have been sealed.
Fig.°7: is a cross section view of the sealed, lined pipe and the seal after the plug has been removed.

### Description of Preferred Embodiments

Fig.°1 illustrates a pipe 2 having a lateral pipe opening 4 for connecting a branched pipe to the main pipe. The main pipe has a diameter of typically from DN 150 - DN 300 and sometimes up to DN 600, whereas the lateral pipe has a diameter of DN 13 - DN 50 and sometimes up to DN 100. The pipe 2 refers to a leaking main pipe 2 for a potable water supply. Most often such water supply pipes are buried beneath the surface of the earth to feed multiple households through individual lateral pipe openings with drinking water. Therefore a fast and cost efficient solution is to repair the main pipe 2 with a liner 6. These liners are usually resin impregnated liners consisting of woven (e.g. fabric), non-woven (e.g. felt) and/or glass fiber material. Typically, epoxy, polyurethane and/or polyeseter resins are used. The installation of the liner in the pipe is made by inversion or by pull-in of the liner main and subsequent inversion of a calibration hose respectively, using a water column or a pressure drum for the inversion. Subsequently, the liner is cured either at ambient temperatures, with hot water or steam. The difficulty resides in the creating and sealing of the junction between a main pipe 2 and a lateral pipe 4 connected hereto. A preferred embodiment of the invention is described by means of FIGS.°1-7.

Prior to fitting the main pipe 2 with a liner 6, a first sealing device 8 is inserted into the lateral pipe opening 4. Depending on the liner 6, the main pipe 2 and the size of the lateral pipe opening 4, the first sealing device 8 can be shaped differently. In this embodiment of the invention, the first sealing device 8 is a plug, made out of a rubbery material comprising a central cylindrical element 10 which is surrounded by a number of flexible ribs 12 separated one from another. The ribs 12 connect the central cylindrical element 10 of the plug 8 to the inner surface of the lateral pipe opening 4 due to the frictional bond between the ribs 12 and the lateral pipe opening 4, resulting from the difference in diameter between the ribs 12 and the lateral pipe opening 4. As can be seen on Fig.°2, the plug 8 protrudes into the main pipe 2 from the lateral pipe opening 4 resulting in a bump 14, an irregular prominence on the inner surface of the liner. The frictional bond of the plug 8 is strong enough to resist a pressure applied to the plug 8 while the liner 6 is fitted to the interior. The first sealing device 8 thus effectively prevents the liner to come in contact with the wall of the main pipe 18 at the lateral pipe opening 4 thereby creating a bump 14 in the liner 6 and a cavity 16 between the wall 18 of the main pipe 2 at the lateral opening 4. The plug 8 prevents resin from the liner 6 to be pushed into the lateral pipe opening 4.

In Fig.°3, shows a main pipe 2 already been fitted with a liner 6 in a well-known way, the bump 14 where the plug 8 is protruding into the main pipe 2. A resin is applied to the surface of the liner 6 before it is pressed against the inner surface of the main pipe 2. It is important to note, that the liner 6 is bulged on purpose. This reduces the effort to identify the exact location of the lateral pipe opening 4 from inside the main pipe 2. After the resin in the liner 6 has cured, a robot equipped with a camera is inserted into the opening of the main pipe 2. The image of the camera is transmitted to the control unit of the robot, wherein the person in charge can detect the exact location of the bump 14 and the corresponding lateral pipe opening 4 with ease.

The robot, being further equipped with a drill, is capable to drill through the bump 14. The diameter of the drill is substantially the same or larger, than the diameter of the lateral pipe opening 4. Thanks to the cavity 16 between the liner 6 and the main pipe 2, the risk of damaging the main pipe 2 while drilling has been reduced.

After having piercing the liner 6 at the lateral pipe opening 4, the plug 8 can be removed from the lateral pipe opening 4. In this preferred embodiment of the invention, the robot has an arm, capable of grabbing the plug 8 and retrieving the plug 8 from the lateral pipe opening 4 as illustrated in Fig.°4.

Referring to Fig.°5, a second sealing device 20 has been inserted into the lateral pipe opening 4. As used herein, the second sealing device 20 comprises a rubber, spherically shaped inner fixing element 22 connected by a rubber cylindrically shaped central element 24 to an inflatable spherically shaped outer fixing element 26. The cylindrical central element 24 of the second sealing device 20 has a smaller diameter compared to the diameter of the lateral pipe opening 4 and compared to the diameter of the hole 28 in the liner 6. Besides that, the central element 24 is long enough to connect the inner fixing element 22 to the outer fixing element 26. The length of the central element 24 is substantially determined by the thickness of the liner 6, the thickness of the cavity 16 and the thickness of the main pipe 2. Since the thickness of the cavity 16 substantially results from the length of the first sealing device 8 which is protruding into the interior of the main pipe 2, the thickness of the cavity 16 can be adjusted. The spherically shaped inner fixing element 22 has a diameter substantially superior to the diameter of the hole 28 in the liner 6 and the spherically shaped inflated outer fixing element 26 has a diameter substantially superior to the diameter of the lateral pipe opening 4. Before inserting the second sealing device 20 into the lateral pipe opening 4, the outer fixing element 26 is deflated, thereby reducing its diameter to a diameter inferior to the diameter of the hole 28 in the liner 6 and to the diameter of the lateral pipe opening 4. A robot feds the second sealing device 20 through the hole 28 in the liner 6 and through the lateral pipe opening 4 until the inner fixing element 22 abuts against the cured liner 6. Thereafter, the outer fixing element 26 is inflated. Thanks to inflating the outer fixing element 26, the area surrounding the central element 24 of the second sealing device 20 is sealed off from the environment. By inflating the outer fixing element 26, the second sealing device 20 is mounted into position. Thereby a seal is formed between the inner fixing element 22 and the liner 6 and between the outer fixing element 26 and the main pipe 2.

In this particular preferred embodiment, the diameter of the central element 24 is substantially smaller than the diameter of the hole 28 in the liner 6 and the diameter of the lateral pipe opening 4, resulting in a play between the lateral pipe opening 4 and the central element 24 as well as a play between the hole 28 in the liner 6 and the central element 24 of the second sealing device 20. The resulting play is substantially enlarging the adjoining cavity 16.

The second sealing device 20 comprises a passage 30 with one end orientated towards the inside of the main pipe 2 and another end with multiple openings circumferentially arranged on the central element 24 oriented towards the enlarged cavity 16, wherein the resin can be distributed more equally. The end of the passage 30 oriented towards the inside of the main pipe 2 has a supply point 32, to substantially inject a curable resin.

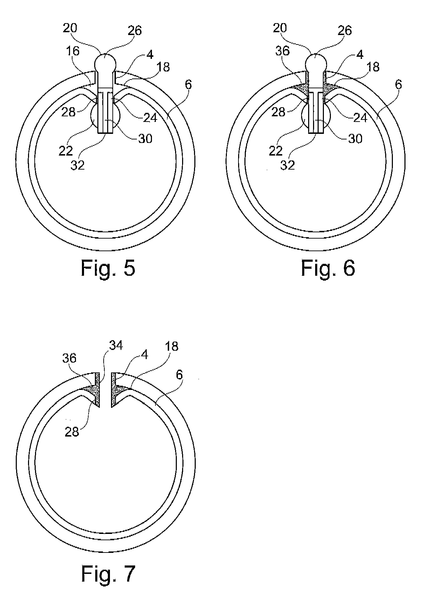

Accordingly, in FIG.°6 the resin is injected into the enlarged cavity 16. Since the entire sealed space is substantially filled with a resin a slightly misaligned or wider hole 28 is compensated by the resin. Once the resin has cured, the robot can deflate the outer fixing element 26 and pull the second sealing device 20 from its initial position. Since the inner surface is very smooth the strength necessary to remove the second sealing device 20 is low. A benefit of the difference in diameter between the central element 24 and the hole 28 in the liner 6 as well as the difference in diameter between the central element 24 and the lateral pipe opening 4 is the surface 34 homogenously covered by the cured resin 36 as illustrated in Fig. 7. The new, inner, resin surface 34 of the lateral pipe opening 4 is homogenously covered without any joints or seams. Due to the smooth surface characteristics of the central element 24, the surface 34 of the lateral pipe opening 4 is also smooth. A smooth surface reduces the resistance the liquid faces, when flowing through the opening. Thereby turbulence can be, by a certain extent avoided, since the lateral fluid fluctuations in the boundary layer are kept small. It is further beneficial that due to the plays, the surface of adherence of the resin between the liner and the main pipe has increased. No sharp edges as well as no differences in surface characteristics extend the life expectancy of such a lateral pipe opening 4. Accordingly no water can enter between the liner 6 and the main pipe 2 at the region of the lateral pipe opening 4. This reduces the risk of the liner 6 of being released from the wall of the main pipe 18. In the case of this preferred embodiment of the invention, it is important to note that the time required to repair the main pipe 2 is reduced since neither the first sealing device (plug) 8 nor the second sealing device 20 are glued to the liner 6 or the main pipe 2.

### Legend:

- 2: Main pipe
- 4: lateral pipe opening
- 6: Liner
- 8: First sealing device, plug
- 10: central cylindrical element
- 12: ribs
- 14: bump
- 16: cavity
- 18: Wall of the main pipe
- 20: Second sealing device
- 22: Inner fixing element
- 24: Central element
- 26: outer fixing element
- 28: hole
- 30: passage
- 32: Supply point
- 34: Surface
- 36: Cured resin

## Claims

1. A method for creating a junction between a main pipe having a cured rehabilitation liner and a lateral pipe, wherein said main pipe has a lateral pipe opening in fluid communication with said lateral pipe, said method being used in conjunction with an installation of said liner on an inner surface of said main pipe, wherein the following steps are performed:
- inserting a first sealing device into said lateral pipe opening, said first sealing device blocking said lateral pipe opening and protruding with one end into said main pipe,
- installing and curing said liner on said inner surface of said main pipe covering said lateral pipe opening, thereby creating a bump between said liner and said main pipe said lateral pipe opening, said bump defining a cavity between the liner and the inner surface of the main pipe
- making a hole in said liner at said lateral pipe opening,
- injecting a substance into said cavity to substantially fill said cavity;
- curing said substance;
- removing said sealing device from said lateral pipe opening after said substance has cured.

2. The method according to claim 1, wherein said cavity is sealed with regard to the liner before injecting said substance.

3. The method according to any of the claims 1 to 2, comprising the following further steps after the hole has been made in the liner and before injecting the substance into said cavity;
- removing said first sealing device from said lateral pipe opening
- inserting a second sealing device into said lateral pipe opening, said second sealing device comprising an inner fixing element and an outer fixing element, said inner fixing element is connected to said outer fixing element by a cylindrical element having a reduced or substantially equal diameter compared to an inner diameter of the lateral pipe opening,
- sealing said inner fixing element with regard to said lateral pipe,
- sealing said outer fixing element with regard to the liner,

4. The method according to claim 3, wherein the outer fixing element of said sealing device is shaped to define a surface which mates with an outer surface of said main pipe around said pipe opening or/and said inner fixing element is being shaped to define a surface which mates with an inner surface of said liner around said pipe opening.

5. The method according to any of the claims 3 to 4, wherein said second sealing device is inserted such that there is substantially no play between said diameter of said cylindrical element and said diameter of said pierced hole in said liner as well as between said diameter of said cylindrical element of said second sealing device and said diameter of said lateral pipe opening.

6. The method according to any of the claims 3 to 5, wherein said second sealing device is inserted such that there is play between:
- said hole in said liner and said cylindrical element of said second sealing device, or
- said diameter of said lateral pipe opening and said diameter of said cylindrical element of said second sealing device, or
- said diameter of said cylindrical element and said diameter of said lateral pipe opening as well as between said diameter of said cylindrical element and said pierced trough hole in said liner,
said play extending said cavity.

7. The method according to any of the claims 3 to 6, wherein said second sealing device has at least one passage with two ends, one end arranged on said inner fixing element and another end arranged on said cylindrical element oriented towards said cavity.

8. The method according to any of the claims 3 to 7, wherein said sealing device comprises multiple passages with one common end arranged on said inner fixing element and multiple ends circumferentially arranged on said cylindrical element.

9. The method according to any of the claims 3 to 8, wherein said inner fixing element or/and said outer fixing element comprises an elastic material.

10. The method according to any of the claim 3 to 9, wherein said inner fixing element or/and said outer fixing element is inflatable.

11. The method according to any of the claims 3 to 10, wherein said substance injected into the cavity comprises a curable resin.

12. A sealing device comprising an inner fixing element connected to an outer fixing element by a central element, said central element being of reduced diameter compared to a maximum diameter of said inner fixing element and a maximum diameter of said outer fixing element, wherein said sealing device is being used in conjunction with an installation of a cured rehabilitation liner at a pipe junction between a main pipe and a lateral pipe, said main pipe having a lateral pipe opening in fluid communication with said lateral pipe, said sealing device is inserted into said lateral pipe opening to seal off said cavity between said liner and said main pipe at said lateral pipe opening, wherein said inner fixing element is mounted such that a seal between said inner fixing element and said liner is made and wherein said outer fixing element is inserted such, that a seal between said outer fixing element and said main pipe or/and a seal between said outer fixing element and said lateral pipe is made.

13. The sealing device according to claim 12, wherein said inner fixing element or/and said outer fixing element comprises an elastic material.

14. The sealing device according to any of the claims 12 to 13, wherein said inner fixing element or/and said outer fixing element is inflatable.

15. The sealing device according to any of the claims 12 to 14, wherein said sealing device comprises a passage with two ends, one end arranged on said inner fixing element and said other end arranged on said cylindrical surface, wherein said other end comprises at least one passage circumferentially arranged on said cylindrical element.
